# EUROPEAN PATENT APPLICATION

(11) **EP 0 583 930 A1**
(43) Date of publication of application: **23.02.1994**
(21) Application number: 93306287.9
(22) Date of filing: 10.08.1993
(51) Int. Cl.: B62D 5/06

(54) **Control device for a power steering motor**

(30) Priority: 10.08.1992 GB 9216938
(71) Applicant: LANSING LINDE LIMITED, Basingstoke, Hampshire RG21 2XJ (GB)
(72) Inventor: Mott Gotobed, Clive, Cherry Trees, Basingstoke, Hampshire RG24 0LN (GB)
(74) Representative: Cross, Rupert Edward Blount

(57) **Abstract**

An electric vehicle is powered by a source (4) of electric power such as a battery carried onboard the vehicle. The traction motor (6) of the vehicle is an electric motor to which at least one driven wheel (8) is coupled. The vehicle further includes powered steering means (10) for steering the vehicle and an electric actuator (12) for actuating the powered steering means (10). Sensing means (14) are provided for sensing a non-zero voltage of at least a pre-determined polarity across the windings of the traction motor (6). When this non-zero voltage is sensed, operation of the electric actuator (12), and hence the powered steering (10), is enabled. Thus, when the vehicle is stationary so that the powered steering means (10) is not required to be operational, the electric actuator (12) for actuating the powered steering means (10) is disabled.

## Description

The present invention relates to an electrically powered device having an electric motor and a mechanism permanently coupled to and actuated by rotation of the electric motor. In particular, the present invention relates to an electric vehicle having an electric traction motor in which powered steering means for steering the vehicle are provided. A further aspect of the present invention relates to an electric circuit for generating a signal in response to a parameter to be sensed.

Electric vehicles are known which are powered by batteries carried onboard the vehicle. The traction motor of the vehicle is an electric motor to which at least one driven wheel is coupled. Such vehicles are often provided with a powered steering system including a second electric motor. The second electric motor may be used, for example, to energise a hydraulic power steering system.

A first object of the present invention is to provide an improved electrically powered device.

According to a first aspect of the present invention there is provided an electrically powered device having:
an electric motor;
a mechanism permanently coupled to and actuated by rotation of the electric motor;
sensing means for sensing the voltage across the windings of the electric motor, the sensing means being adapted to sense a voltage of either polarity;
and means responsive to the sensing means for producing a signal dependent upon the voltage sensed by the sensing means.

This first aspect of the present invention is applicable to electrically powered devices in which a mechanism is permanently coupled to the electric motor. Such a coupling may be inherent in prior art versions of the device. With a permanent coupling between the motor and the mechanism, operation of the mechanism results in rotation of the electric motor even in the absence of an applied drive voltage to the electric motor. Rotation of the electric motor in the absence of an applied drive voltage generates a small voltage due to the residual field flux. The provision of sensing means adapted to sense a voltage of either polarity in the device therefore allows operation of the mechanism to be sensed independent of the application of a drive voltage or direction of rotation of the motor. A signal dependent upon the voltage sensed by the sensing means is produced by means responsive to the sensing means.

Said first aspect of the present invention may have a wide variety of applications. In an electric vehicle in which at least one driven wheel is permanently coupled to the electric traction motor, a signal from the means responsive to the sensing means may be used to indicate the state of motion of the vehicle without the need for a mechanically coupled tachometer. The invention is also applicable to electrically powered conveyor belts in which lack of rotation of the electric motor indicates that the conveyor belt is not moving.

In the situation where the mechanism should be at rest, detection of its operation may be used to produce a signal for example to apply a braking system to prevent operation of the mechanism, to sound an alarm, or to signal a transmitter to send warning to a remote station that the mechanism is in operation. Similarly, in the situation where the mechanism should be operational, detection of lack of operation of the mechanism may be used to produce a signal for example to start an auxiliary motor to initiate operation of the mechanism, to signal a transmitter to warn a remote station that the mechanism is not operational or to switch off auxiliary mechanisms (such as heaters) which cannot operate effectively independently of the main mechanism. Detection of operation or lack of operation of the mechanism may be used to produce a signal to switch on a rotating or flashing beacon as a warning depending on the particular electrically powered device. Further applications may include vehicles used to deposit grit or salt on road or rail surfaces to ensure an even distribution of the substance on the surface by deposition of the substance only when the vehicle is moving.

Said first aspect of the present invention is particularly applicable to electrically powered devices including a portable source of electric power. Many electrically powered devices include electrically powered auxiliary mechanisms which are not required to be operation at all times. Operation of such auxiliary mechanisms may be required only when the main mechanism is operating, or not operating, depending on the particular circumstances. Generation of a signal when the main mechanism is not operating (or conversely, is operating) to switch off an auxiliary mechanism, or at least to warn an operator that the auxiliary mechanism should be switched off, may result in savings in consumption of electric energy.

A second aspect of the present invention provides an electric vehicle having a source of electric power, at least one driven wheel, an electric traction motor coupled to the or each driven wheel, powered steering means for steering the vehicle, an electric actuator for actuating the powered steering means, sensing means for sensing a non-zero voltage of at least a predetermined polarity across the windings of the traction motor and means responsive to the sensing means for enabling operation of the electric actuator when said non-zero voltage across the windings of the traction motor is sensed.

The present invention makes use of the appreciation that the powered steering means should be operational when the vehicle is moving but need not be operational when the vehicle is stationary. Therefore, during periods when the powered steering means is not required to be operational, the electric actuator for actuating the powered steering means can be disabled. When powered steering is required, the electric actuator is enabled to actuate the powered steering means. The present invention further makes use of the appreciation that no voltage is induced in the windings of the traction motor when the vehicle is stationary but that a non-zero voltage can be sensed in the windings of the traction motor when the vehicle is moving.

The present invention therefore provides a vehicle in which the electric actuator for the powered steering means is enabled when powered steering is required. At other times, the electric actuator can be disabled to avoid wasting electrical energy and unnecessary generation of noise. Disabling of the electric actuator is therefore at least partly automatic and not purely manual by the human operator of the vehicle, so that savings in consumption of electric energy by the vehicle may result.

Preferably, the sensing means is adapted for sensing a non-zero voltage of either polarity. This adaptation allows the configuration of the sensing means to be independent of the reference voltage to which the voltage across the windings of the traction motor is referenced. Advantageously, the sensing means is adapted for sensing a voltage greater than a threshold value. When the vehicle is slowing down, the voltage across the windings of the motor may fall below the threshold value before the vehicle comes to rest. Means may therefore be provided to enable the electric actuator for a predetermined period after the voltage across the windings falls below the threshold value to ensure that the vehicle is at rest before the electric actuator is disabled.

Preferably, the traction motor is permanently coupled to the or each driven wheel such that rotation of the or each driven wheel when the vehicle is coasting results in rotation of the motor. Such a coupling allows the electric actuator to be enabled, and hence the powered steering means operational, when the vehicle is moving by coasting without assistance from the traction motor. In one embodiment, a non-zero voltage of one polarity is sensed when the motor is rotating to drive the or each driven wheel and a non-zero voltage of the other polarity is sensed when rotation of the motor is caused by rotation of the or each driven wheel when the vehicle is coasting. Where the sensing means is adapted for sensing a voltage greater than a threshold value, this threshold value may be different for each polarity.

The vehicle may further comprise means responsive to operation of the accelerator to enable operation of the electric actuator allowing the powered steering means to be operative immediately the vehicle is started and about to move.

Preferably, the vehicle includes means responsive to operation of brake means preventing motion of the vehicle to disable operation of the electric actuator. In this situation where motion of the vehicle is prevented, and so the vehicle is stationary, powered steering is not required and so the electric actuator actuating the powered steering means may be disabled.

Advantageously, said means responsive to operation of the brake means is coupled to other means, responsive to the sensing means or to operation of the accelerator, to enable operation of the electric actuator such that said other means are disabled when motion of the vehicle is prevented, whereby operation of the electric actuator is disabled, and said other means are enabled when motion of the vehicle is permitted. Said means responsive to operation of the brake means may further include means responsive to release of the brake means permitting motion of the vehicle to enable operation of the electric actuator for a finite period independent of the status of said other means.

The vehicle may further include indicating means for indicating that the vehicle is in motion and means responsive to the sensing means to enable operation of the indicating means when a non-zero voltage of at least one predetermined polarity across the windings of the traction motor is sensed. Such an indicating means is operational whenever the vehicle is in motion.

A further aspect of the present invention provides an electric circuit for generating a signal in response to a parameter to be sensed comprising:
supply terminals for connection to a supply voltage;
a DC-DC isolating converter;
current responsive means connecting the converter to the supply terminals;
a load;
load switching means to connect the load across the output of the converter;
and sensing means responsive to a parameter to be sensed for controlling operation of the load switching means, whereby operation of the load switching means to connect the load across the output of the converter results in a change in current flow through the current responsive means to generate a signal in response to the parameter to be sensed.

Embodiments of the present invention will now be described, by way of example only, and with reference to the accompanying drawings in which:
Figure 1 shows schematically features of a first embodiment of a vehicle provided in accordance with the present invention;
Figure 2 shows schematically features of a second embodiment of a vehicle provided in accordance with the present invention;
and Figure 3 shows an electric circuit for use with the embodiments of Figures 1 or 2.

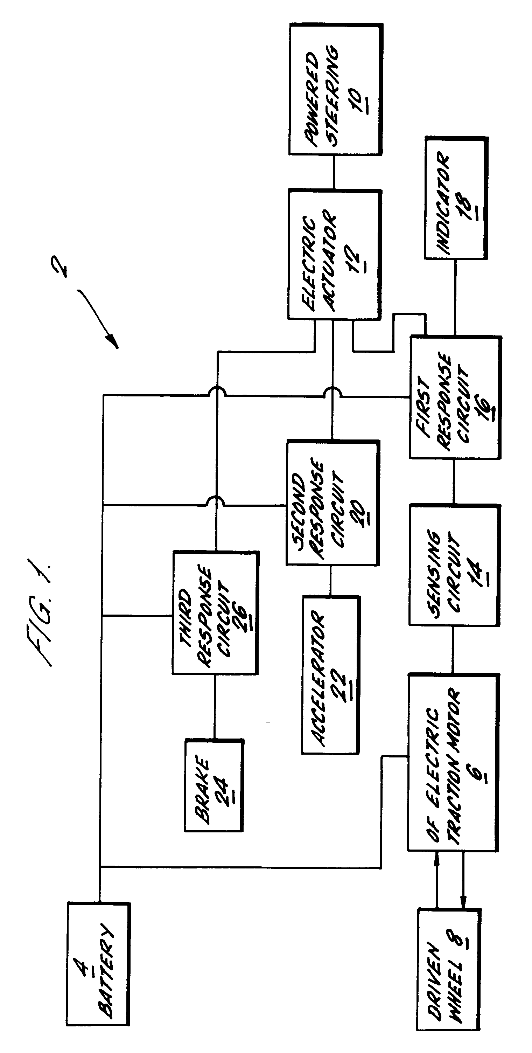

As shown in Figure 1, an electric vehicle 2 includes a battery 4 for providing power to an electric traction motor 6. At least one of the wheels of the vehicle is a driven wheel 8 to which the electric traction motor 6 is coupled such that rotation of the electric traction motor 6 drives the wheel 8 to effect movement of the vehicle 2. Many tractors, for example, have four road wheels, of which only two are driven wheels coupled to the traction motor. Advantageously, permanent coupling, eg. direct coupling or coupling via a non-slipping gear box is provided between the driven wheel or wheels 8 and the motor 6 such that rotation of the wheel 8 when the vehicle is coasting results in rotation of the motor 6.

The vehicle 2 includes a powered steering system 10 which is actuated by an electric actuator 12. Typically, the powered steering system 10 is powered hydraulically, the pump for the hydraulic system being run by an auxiliary electric motor. Powered steering is required when the vehicle is moving, and preferably when the vehicle is about to start moving. However, at other times, when the vehicle is remaining stationary, powered steering is not required. Running of the auxiliary electric motor 12 when powered steering is not required is inefficient and wastes electrical energy. This waste of electrical energy is particularly significant because the electric power available to the vehicle at any instance from the battery 4 is limited. Furthermore, if the powered steering system is powered hydraulically, the noise generated by its operation should be reduced when possible.

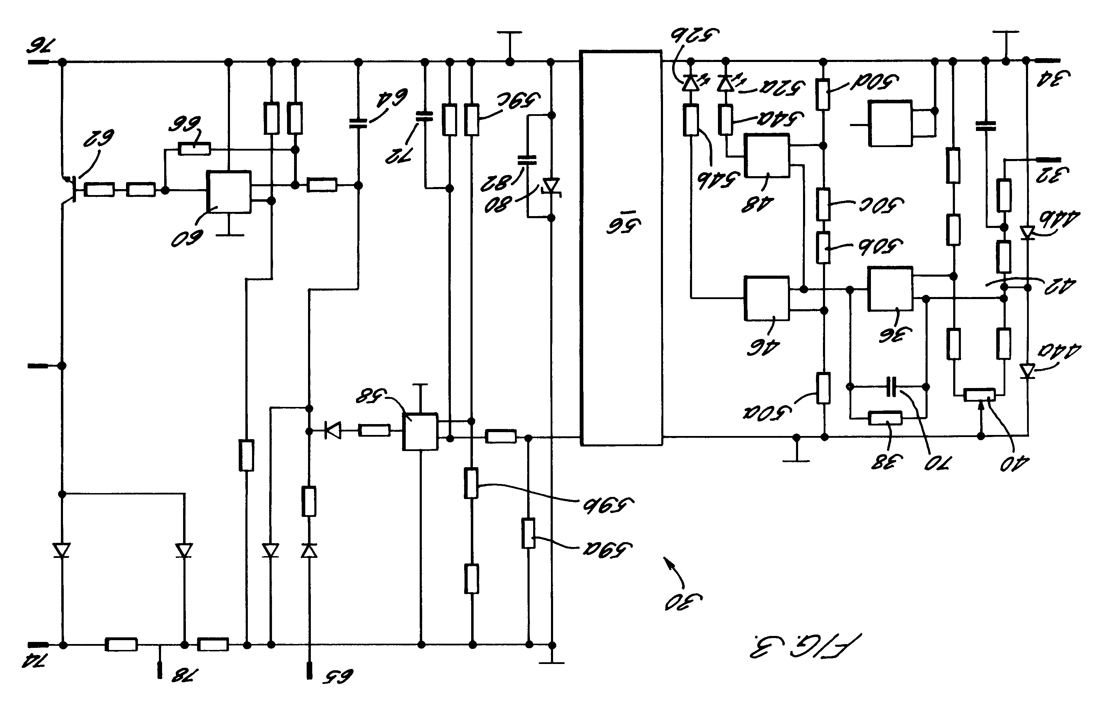

To alleviate the problem of unnecessary electric power consumption and production of noise by the powered steering system 10, the vehicle is configured so that operation of the electric actuator when powered steering is required can be at least in part automatic. A sensing circuit 14 is provided to sense a non-zero voltage across the windings of the traction motor, indicating that the motor is rotating and, hence, that the vehicle is moving. When a non-zero voltage across the windings of the traction motor is sensed by the sensing circuit, a response circuit 16 (referenced in Figure 1 as a "first response circuit 16") responds to the sensing circuit 14 by enabling operation of the electric actuator 12, typically by energising the coil in a solenoid switch which switches on the electric actuator. Operation of the sensing circuit 14 and first response circuit 16 will be described in greater detail with respect to Figure 3 of the accompanying drawings.

With the preferred permanent coupling between the driven wheel or wheels 8 and the electric traction motor, the motor rotates when the wheel 8 rotates even if no drive voltage is being applied to the electric traction motor itself. The permanent coupling therefore enables the sensing circuit 14 to detect when the wheel 8 is rotating and so the vehicle is moving, even without assistance from the motor 6, for example, when the vehicle 2 is coasting or slowing down.

As indicated in Figure 1, the vehicle may also include an indicator 18 connected to an output of the first response circuit 16. The indicator 18, which may be a flashing light, is able to provide a warning that the vehicle 2 is indeed moving.

Advantageously, the powered steering system 10 is operational when the vehicle is about to start moving. The embodiment of Figure 1 therefore includes a second response circuit 20 which responds to depression of an accelerator 22 by enabling the electric actuator 12 of the powered steering system 10.

The input to enable the electric actuator 12 may also be dependent upon the parking brake 24, or other brake means, used to prevent movement of the vehicle 2 once the vehicle 2 is stationary. A third response circuit 26 provides an output dependent upon the position of the brake 24.

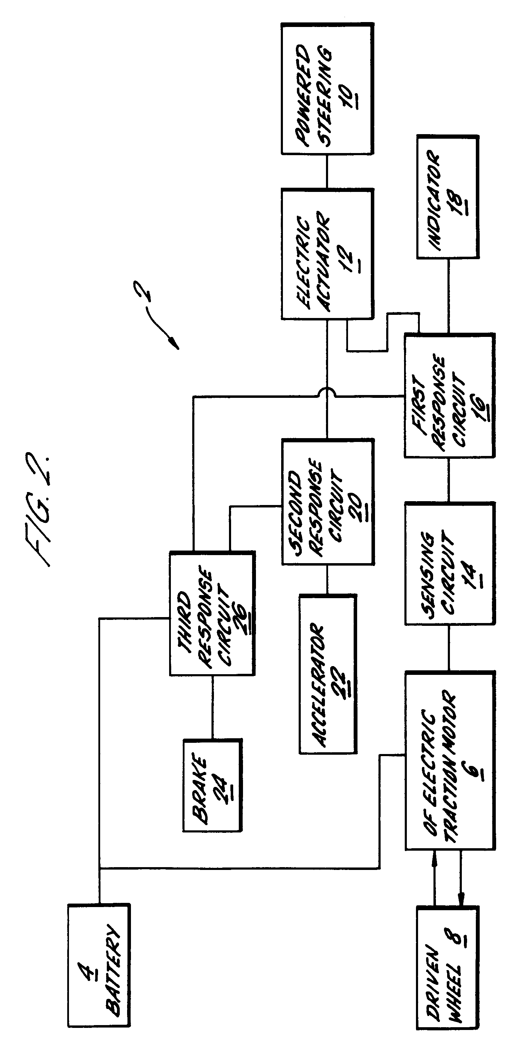

In the embodiment of Figure 2 (in which like parts to those shown in Figure 1 have been designated by like reference numerals), the third response circuit 26 is connected in series to each of the first and second response circuits 16, 20. This embodiment assumes that when the brake 24 is engaged, movement of the vehicle is not possible. Release of the brake 24 can then be used to energise the control system because powered steering will not be required when the brake 24 is engaged. In addition to the brake 24 being released, either the accelerator 22 must be depressed or the motor 6 must be rotating to generate a non-zero voltage, for the electric actuator to be enabled to actuate the powered steering system.

Third response circuit 26 may further include an override such that the electric actuator 12 is enabled to actuate the powered steering system for a finite period after the brake 24 is released independent of the state of motion of the vehicle and the accelerator. The powered steering system is immediately switched on when the parking brake is released and is switched off automatically after a finite period if the vehicle has not been moved in that time. With this feature, a driver using the parking brake correctly by applying the parking brake when the vehicle is stationary and releasing the parking brake to drive away, will not notice that the powered steering system is affected by operation of the control circuit.

A control circuit suitable for use as the sensing circuit 14, first response circuit 16, second response circuit 20 and part of the third response circuit 26 of the embodiments of Figures 1 and 2 is shown in Figure 3. It will be noted that, in the circuit of Figure 3, the second and third response circuits 20, 26 forms part of the sensing circuit 14 and first response circuit 16 although the circuits have been shown separately in Figures 1 and 2 for ease of explanation. The active components of the circuit are chosen to have a minimal quiescent current consumption.

The control circuit 30 is connected to the terminals of windings of the traction motor to monitor the voltage across the windings at pins 32, 34. The voltage across the windings can vary greatly in magnitude depending on the speed at which the vehicle is moving. When the vehicle is creeping, the voltage generated by the motor rotating within the residual field flux is of one polarity and typically of the order of tens of millivolts. At normal speeds of the vehicle, the motor is energised by a central control system and large voltages of battery potential (of the order of forty-eight or eighty volts) of the other polarity are applied to the motor either continuously or via a chopper circuit. As the voltage across the pins 32, 34 may be of the order of tens of millivolts, an amplifier 56 is used to amplify the input voltage. The gain of the amplifier 36 is set by a resistance 38. A potentiometer 40 is used to set the output of the amplifier to half supply voltage. The combination of a resistor network 42 about the input of the amplifier 36 and diodes 44a, 44b ensures that the input voltage to the amplifier 36 always remains within the amplifier supply rails.

The output of the amplifier 36 is connected to a window comparator configured by two comparators 46, 48. The window comparator enables voltages of both negative and positive polarity to be compared with a reference voltage so that the sensing circuit is effective to sense a non-zero voltage of either polarity from the traction motor. The positive and negative threshold values of the window of the window comparator are determined by resistances 50a, 50b, 50c, 50d. When the output voltage of the amplifier 36 exceeds the threshold value of the same polarity as the polarity of the amplifier output voltage, a signal is produced. In the embodiment shown, either LED 52a or LED 52b will illuminate depending on the polarity of the motor voltage, to connect respectively resistances 54a, 54b into a circuit across the output of an isolating DC-DC converter 56. Illumination of one of the LEDs 52a, 52b indicates an increase in the current taken from the converter 56 and can be used to enable setting the reference point of the first amplifier. The isolating converter 56 is provided to isolate the circuitry for sensing the voltage of the motor windings from the surrounding electrical environment.

An increase in current taken from the isolating converter 56 is detected on the other side of the isolating converter 56 from the motor by a comparator 58 which compares the voltage drop across a resistance 59a with a reference voltage set by resistances 59b, 59c. The increase in current taken from the converter 56 by illumination of one of the LEDs 52, 54 is accompanied by an increase in current through resistance 59a. The comparator 58 responds to this increase in current flow by its output going high. This high voltage at the output of the comparator 58 is detected at another comparator 60 which responds by switching on a transistor 62. The transistor 62 is used to control the coil in a solenoid switch which switches on the electric motor of the power steering system.

In this way, the control circuit 30 senses a non-zero voltage of either polarity in the windings of the traction motor and responds to this non-zero voltage by switching on the electric motor to actuate the powered steering system.

When the vehicle is slowing down, the voltage generated in the windings of the motor may fall below that required to keep the output of the comparator 58 high before the vehicle comes to rest. In this event, a capacitor 64 connected to the output of the comparator 58 maintains sufficient charge to ensure that the transistor 62 is switched on, and hence the powered steering system is actuated, for several seconds to allow the vehicle time to roll to rest before the electric actuator is switched off.

In addition to responding to rotation of the traction motor, the control circuit 30 is also able to respond to depression of the vehicle accelerator. When the vehicle accelerator is depressed, a battery voltage signal is input to the control circuit at pin 65 and hence to the second comparator 60. This ensures that the solenoid switch is energised when that the accelerator is depressed and, in particular, when the vehicle is stationary but about to move.

A resistor 66 provides a small amount of positive feedback to the comparator 60 and ensures that the transistor 62 is never in a partially turned on state.

Capacitors 68, 70 and 72 stop the circuit responding to transients or from self oscillation.

To power the control circuit 30, connections may be made to a battery across pins 74 and 76 or 78 and 76. From the battery voltage, a stabilised ten volts supply is provided by the combination of a Zener diode 80 and a capacitor 82.

When the control circuit 30 is connected to a supply voltage, the capacitors in the circuit will take a short time to charge. While the capacitor 70 is charging, the circuit 30 behaves as if a voltage is appearing across the pins 32, 34 to indicate movement of the vehicle and so the solenoid switch is energised. When the capacitor 70 is fully charged, the circuit will behave as if no voltage is appearing across the pins 32, 34 and so the output of the comparator 58 will be kept high by the capacitor 64 for a further few seconds. In this way, the solenoid switch is energised to switch on the electric actuator to actuate the powered steering system for a finite period after the control circuit is connected to a supply voltage. As described previously, the control system may be energised by release of the parking brake. In this way, the powered steering system is actuated for a short finite period after the parking brake is released. If the vehicle is caused to move during this finite period, the powered steering system will remain actuated. If the vehicle is not caused to move within the finite period after the parking brake has been released, the powered steering system will be switched off by the control circuit 30.

Modifications to the embodiments described within the scope of the present invention will be apparent to those skilled in the art.

## Claims

1. An electric vehicle having:
a source of electric power;
at least one driven wheel;
an electric traction motor coupled to the or each driven wheel;
powered steering means for steering the vehicle;
an electric actuator for actuating the powered steering means;
sensing means for sensing a non-zero voltage of at least a predetermined polarity across the windings of the traction motor;
and means responsive to the sensing means to enable operation of the electric actuator when said non-zero voltage across the windings of the traction motor is sensed.

2. A vehicle according to Claim 1 wherein the sensing means is adapted for sensing a non-zero voltage of either polarity.

3. A vehicle according to Claims 1 or 2 wherein the sensing means is adapted for sensing a voltage greater than a threshold value.

4. A vehicle according to any one of the preceding claims wherein the traction motor is permanently coupled to the or each driven wheel such that rotation of the or each driven wheel, when the vehicle is coasting, results in rotation of the motor.

5. A vehicle according to any one of Claims 1 to 3 having an accelerator and means responsive to operation of the accelerator to enable operation of the electric actuator.

6. A vehicle according to any one of Claims 1 to 4 having brake means for preventing motion of the vehicle and means responsive to operation of the brake means preventing motion of the vehicle to disable operation of the electric actuator.

7. A vehicle according to Claim 6 wherein said means responsive to operation of the brake means is coupled to other means to enable operation of the electric actuator such that said other means are disabled when motion of the vehicle is prevented, whereby operation of the electric actuator is disabled, and said other means are enabled when motion of the vehicle is permitted.

8. A vehicle according to Claim 7 wherein said means responsive to operation of the brake means further includes means responsive to release of the brake means permitting motion of the vehicle to enable operation of the electric actuator for a finite period independent of the state of said other means.

9. A vehicle according to any one of Claims 1 to 8 further comprising indicating means for indicating that the vehicle is in motion and means responsive to the sensing means to enable operation of the indicating means when a non-zero voltage of at least one predetermined polarity across the windings of the traction motor is sensed.
